# EUROPEAN PATENT APPLICATION

(11) **EP 4 657 944 A1**
(43) Date of publication of application: **03.12.2025**
(21) Application number: 24806232.5
(22) Date of filing: 09.04.2024
(51) Int. Cl.: H04W 72/0446

(54) **PHYSICAL CHANNEL RECEIVING AND SENDING METHOD, COMMUNICATION APPARATUS, AND STORAGE MEDIUM**

(30) Priority: 12.05.2023 CN 202310544130
(71) Applicant: ZTE Corporation, Shenzhen, Guangdong 518057 (CN)
(72) Inventor: BIAN, Luanjian, Shenzhen, Guangdong 518057 (CN); DAI, Bo, Shenzhen, Guangdong 518057 (CN); CHEN, Mengzhu, Shenzhen, Guangdong 518057 (CN); HU, Youjun, Shenzhen, Guangdong 518057 (CN); LIU, Kun, Shenzhen, Guangdong 518057 (CN); YANG, Weiwei, Shenzhen, Guangdong 518057 (CN)
(74) Representative: Vossius & Partner Patentanwälte Rechtsanwälte mbB
(86) International application number: PCT/CN2024/086797
(87) International publication number: WO 2024/234873

(57) **Abstract**

Provided in the present disclosure are a physical channel receiving and sending method, a communication apparatus, and a storage medium. The physical channel receiving method comprises: determining a first processing duration; determining a physical channel to be decoded from a first physical channel and a second physical channel according to the first processing duration; and decoding the physical channel to be decoded.

## Description

The present disclosure claims a priority to Chinese Patent Application No. 202310544130.0, and filed on May 12, 2023, the entire content of which is incorporated into the present application by reference.

### TECHNICAL FIELD

The present disclosure relates to the field of communication technologies, and in particular, to a physical channel receiving method and sending method, a communication apparatus, and a storage medium.

### BACKGROUND

In 5G NR, a reduced capability user equipment (RedCap UE) of Release-18 version has a data buffering capability of up to 20 MHz bandwidth and a physical downlink shared channel (PDSCH) data processing capability of up to 5 MHz bandwidth. That is, a processing bandwidth of the Release-18 RedCap UE for PDSCH is reduced, and a maximum supported bandwidth is 5 MHz. Then, in a case where the Release-18 RedCap UE buffers PDSCH data with a bandwidth greater than 5 MHz, it needs to process the PDSCH data for a plurality of times, with each processing not exceeding the 5 MHz bandwidth of data.

### SUMMARY

In an aspect, a physical channel receiving method is provided, and applied to a first communication node, and the physical channel receiving method includes: determining a first processing duration; determining a physical channel to be decoded from a first physical channel and a second physical channel according to the first processing duration; and decoding the physical channel to be decoded.

In another aspect, a physical channel sending method is provided, and applied to a first communication node, and the physical channel sending method includes: receiving a third physical channel; in a case where a bandwidth of the third physical channel is greater than a target bandwidth of the first communication node, determining a second processing duration; determining sending time of a fourth physical channel according to the second processing duration; and sending the fourth physical channel based on the sending time.

In yet another aspect, a communication apparatus is provided, and applied to a first communication node, and the communication apparatus includes: a processing module and a decoding module. The processing module is configured to determine a first processing duration; the processing module is further configured to determine a physical channel to be decoded from a first physical channel and a second physical channel according to the first processing duration; and the decoding module is configured to decode the physical channel to be decoded.

In yet another aspect, a communication apparatus is provided, and applied to a first communication node, and the communication apparatus includes: a transceiving module and a processing module. The transceiving module is configured to receive a third physical channel; the processing module is configured to determine a second processing duration in a case where a bandwidth of the third physical channel is greater than a target bandwidth of the first communication node; the processing module is further configured to determine sending time of a fourth physical channel according to the second processing duration; and the transceiving module is further configured to send the fourth physical channel based on the sending time.

In yet another aspect, a communication apparatus is provided, and the communication apparatus includes: a memory and a processor; the memory is coupled with the processor; the memory is configured to store computer program instructions executable by the processor; and the processor, when executing the computer program instructions, implements the above methods.

In yet another aspect, a computer readable storage medium is provided, the computer readable storage medium has stored computer program instructions thereon, and the computer program instructions, when executed on a computer (e.g., a communication apparatus), implement the above methods.

In yet another aspect, a computer program product is provided, the computer program product includes computer program instructions, and the computer program instructions, when executed, implement the above aspects.

### BRIEF DESCRIPTION OF THE DRAWINGS

The drawings are used to provide a further understanding of the technical solutions of the present disclosure, constitute a part of the specification, are used to explain the technical solutions of the present disclosure together with the embodiments of the present disclosure, and do not limit the technical solutions of the present disclosure.
FIG. 1 is a schematic diagram of an architecture of a communication system, according to the embodiments of the present disclosure.
FIG. 2 is a schematic flowchart of a physical channel receiving method, according to the embodiments of the present disclosure.
FIG. 3 is a schematic flowchart of a physical channel sending method, according to the embodiments of the present disclosure.
FIG. 4 is a schematic flowchart of a method for determining a characteristic of a first communication node, according to the embodiments of the present disclosure.
FIG. 5 is a schematic diagram of components of a communication apparatus, according to the embodiments of the present disclosure.
FIG. 6 is a schematic diagram of components of another communication apparatus, according to the embodiments of the present disclosure.
FIG. 7 is a structural schematic diagram of a communication apparatus, according to the embodiments of the present disclosure.

### DETAILED DESCRIPTION

The technical solutions in the embodiments of the present disclosure will be described clearly and completely below in conjunction with the drawings in the embodiments of the present disclosure, and obviously, the described embodiments are merely a part of the embodiments of the present disclosure, not all of the embodiments. Based on the embodiments of the present disclosure, all other embodiments obtained by those ordinary skilled in the art without making inventive efforts fall within the scope of protection of the present disclosure.

The terms such as "first", "second", etc., are used only for descriptive purposes and cannot be construed as indicating or implying relative importance or implicitly indicating the number of the indicated technical features. Thus, features limited with "first", "second", etc., may explicitly or implicitly include one or more of the features. In the description of the present disclosure, unless otherwise specified, "multiple / a/the plurality of" means two or more.

In the embodiments of the present disclosure, words such as "exemplary (exemplarily)" or "for example" are used to represent examples, illustrations, or descriptions. Any embodiment or design solution described with "exemplary (exemplarily)" or "for example" in the embodiments of the present disclosure should not be interpreted as being more preferred or advantageous than other embodiments or design solutions. Specifically, the use of the terms such as "exemplary (exemplarily)" or "for example", etc., is intended to present related concepts in a specific manner.

For a Release-18 RedCap UE, when processing a PDSCH corresponding to a random access response (RAR), in a case where a bandwidth of the RAR PDSCH is greater than a maximum bandwidth supported by the Release-18 RedCap UE, a processing latency of the Release-18 RedCap UE will increase. For example, the Release-18 RedCap UE has a data buffering capability of a maximum bandwidth of 20 MHz and a maximum bandwidth of 5 MHz of a physical downlink shared channel, and then, in a case where the Release-18 RedCap UE buffers PDSCH data with a bandwidth greater than 5 MHz, it needs to process the PDSCH data for a plurality of times, with each processing not exceeding the 5 MHz bandwidth of data. Therefore, in a case where the Release-18 RedCap UE processes a physical channel with a relatively large bandwidth, the processing latency is relatively large, which may affect the scheduling of the uplink physical channel or the downlink physical channel that conflicts in a time domain. Furthermore, sending time of a PDSCH for a message 3 (Message 3, Msg3) scheduled by the RAR will be affected by the latency. Alternatively, in a case where another PDSCH is scheduled continuously in time, the processing time of the two PDSCHs may overlap with each other, so the UE may not be able to process all the PDSCHs.

In view of this, the embodiments of the present disclosure provide a physical channel receiving method, and the physical channel receiving method includes that: a first communication node first determines a first processing duration, and determines a physical channel to be decoded from a first physical channel and a second physical channel according to the first processing duration, and decodes the physical channel to be decoded. In this way, when the first physical channel and the second physical channel may conflict with each other in the time domain, a proper physical channel to be decoded is selected from the first physical channel and the second physical channel for decoding, thereby ensuring normal communication of the communication system.

In addition, the embodiments of the present disclosure also provide a physical channel sending method, and the physical channel sending method includes that: a first communication node receives a third physical channel; in a case where a bandwidth of the third physical channel is greater than a target bandwidth of the first communication node, determines a second processing duration; and determines sending time of a fourth physical channel according to the second processing duration; and sends the fourth physical channel based on the sending time. Thus, in a case where the bandwidth of the third physical channel is greater than the target bandwidth of the first communication node, a reasonable sending time of the fourth physical channel is determined based on the second processing duration, to avoid the sending of the fourth physical channel being affected by an additional processing duration for processing the third physical channel.

The technical solutions provided in the embodiments of the present disclosure may be applied to various mobile communication networks, for example, new radio (New Radio, NR) mobile communication networks using the fifth generation mobile communication technology (5th generation mobile networks, 5G), future mobile communication networks or multiple communication fusion systems, etc., which are not limited to the embodiments of the present disclosure.

A network architecture of a mobile communication network (including but not limited to 3G, 4G, 5G and future mobile communication networks) in the embodiments of the present disclosure may include network side devices (for example, including but not limited to a base station) and receiving side devices (for example, including but not limited to a terminal). Also, it should be understood that in the embodiments of the present disclosure, a first communication node (also referred to as a first node device) may be a receiving side device, and a second communication node (also referred to as a second node device) may be a network side device. Alternatively, the first communication node may be a network side device, and the second communication node may be a receiving side device. Yet alternatively, in device-to-device communication, both the first communication node and the second communication node may be terminals or base stations.

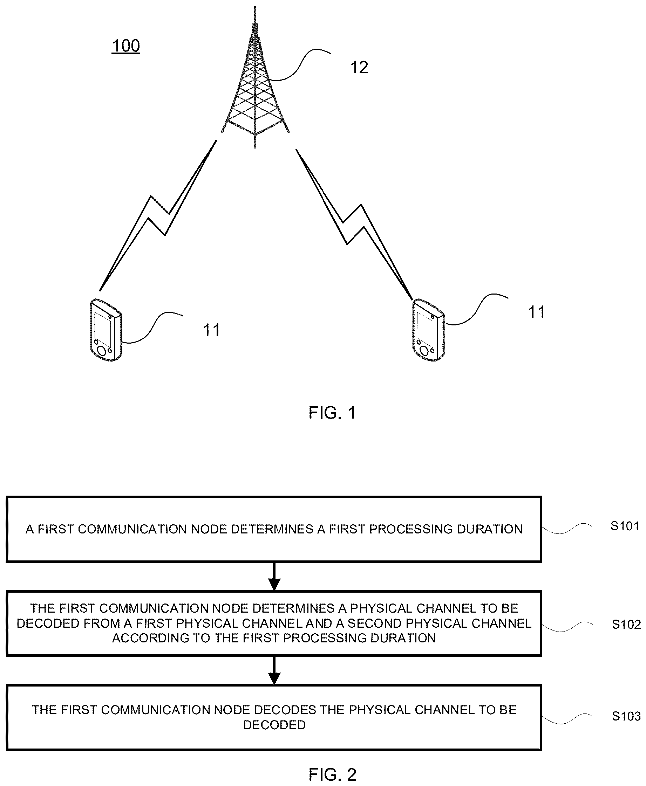

Exemplarily, FIG. 1 shows a structural schematic diagram of a communication system, provided in the embodiments of the present disclosure. As shown in FIG. 1, the communication system 100 may include one or more first communication nodes 11 and a second communication node 12. The second communication node 12 may be communicatively connected with the one or more first communication nodes 11.

The first communication node 11 may also be referred to as a terminal device, a user equipment, a mobile station, a mobile terminal, etc. Exemplarily, the terminal may be a mobile phone, a tablet computer, a computer with a wireless transceiver function, a virtual reality terminal, an augmented reality terminal, a wireless terminal in industrial control, a wireless terminal in autonomous driving, a wireless terminal in remote surgery, a wireless terminal in transportation safety, a wireless terminal in a smart city, or a wireless terminal in a smart home, etc. The embodiments of the present disclosure do not limit the device form used for the terminal.

In the embodiments of the present disclosure, the first communication node 11 may be a Release-18 RedCap UE. That is, a number of PRBs that the first communication node 11 can process for the PDSCH in a slot is less than or equal to the target bandwidth. In a case where a number of transmitted PRBs of a physical channel is greater than the target bandwidth, the processing latency of the Release-18 RedCap UE increases.

In addition, the second communication node 12 may be used to implement functions, such as resource scheduling, radio resource management, and radio access control, etc., of terminals. For example, the base station may be any one of a small base station, a radio access point, a receiving and transmitting point (transmission receive point, TRP), a transmission point (TP), and some other access nodes.

It should be noted that FIG. 1 is only an exemplary frame diagram, and the number of devices included in FIG. 1 and names of the devices are not limited. In addition to the devices shown in FIG. 1, the communication system may also include other devices, such as core network devices.

The embodiments of the present disclosure do not limit application scenarios. The system architecture and traffic scenarios described in the embodiments of the present disclosure are intended to illustrate the technical solutions of the embodiments of the present disclosure more clearly, and do not limit the technical solutions provided in the embodiments of the present disclosure. Those ordinary skilled in the art can know that, with the evolution of the network architecture and the emergence of new traffic scenarios, the technical solutions provided in the embodiments of the present disclosure are also applicable to similar technical problems.

The exemplary embodiments of the present disclosure provide a physical channel receiving method, applied to a first communication node. As shown in FIG. 2, the physical channel receiving method may include the following S101 to S103.

In S101, the first communication node determines a first processing duration.

The first processing duration is an additional processing duration required for a first-type communication node to process a physical channel greater than a target bandwidth.

In some embodiments, the target bandwidth may be a number of physical resource blocks (PRBs) in a frequency domain. Exemplarily, in a case of 15 KHz subcarrier spacing, the target bandwidth of the first-type communication node is 25 physical resource blocks. Alternatively, in a case of 30 KHz subcarrier spacing, the target bandwidth of the first-type communication node is 12 physical resource blocks.

In some embodiments, the communication node may include the first-type communication node and a second-type communication node.

In some embodiments, the first-type communication node has at least one of Characteristics 1 and Characteristics 2 as follows. Therefore, in a case where the first communication node has the following Characteristic 1 and/or Characteristic 2, it may be determined that the first communication node is the first-type communication node. In addition, in a case where the first communication node does not have Characteristic 1 and Characteristic 2, it may be determined that the first communication node is the second-type communication node.

Characteristic 1: the first-type communication node satisfies a bandwidth requirement. The bandwidth requirement includes that a processing bandwidth of the physical downlink shared channel (PDSCH) is less than or equal to the above-mentioned target bandwidth. The processing bandwidth of the PDSCH represents a number of PRBs that the first-type communication node can process for the PDSCH in a slot.

The bandwidth requirement may also include that a transmission bandwidth of a physical uplink shared channel (PUSCH) is less than or equal to the above-mentioned target bandwidth. The transmission bandwidth of the PUSCH represents the number of PRBs that the first-type communication node can send for the PUSCH in a slot or a frequency hopping resource.

Furthermore, since the bandwidth of the PDSCH that can be processed or the bandwidth of the PUSCH that can be sent is reduced, the first-type communication node is enabled to have lower complexity.

Characteristic 2: the first-type communication node satisfies a peak data rate requirement. The peak data rate requirement includes a product of a number of transmission layers, a modulation order and an adjustment factor being less than 4.

In a case where the product of the number of transmission layers, the modulation order and the adjustment factor is less than 4, the peak data rate decreases. It should be understood that, the above-mentioned peak data rate is determined based on a product of three capability parameters, i.e., the number of transmission layers, the modulation order and the adjustment factor. Typically, the product of the three capability parameters is greater than or equal to 4. However, the product of the three capability parameters, i.e., the modulation order, the number of transmission layers, and the adjustment factor, reported by the first-type communication node is less than 4, and a minimum value of the product is equal to 3.2 or 0.8. For the first-type communication node, the product of the three capability parameters is reduced to 3.2 or 0.8, so the peak data rate is reduced accordingly. Furthermore, the first-type communication node has lower complexity.

In some embodiments, the first processing duration may be determined based on a type of the first communication node.

In an implementation, the first communication node is the first-type communication node. Furthermore, for the first-type communication node, the first processing duration is determined. It should be understood that, the first communication node has the above-mentioned Characteristic 1, or the first communication node has the above-mentioned Characteristic 2, or the first communication node has both the above-mentioned Characteristic 1 and Characteristic 2.

In some embodiments, in a case where the first communication node is the first-type communication node, the first processing duration decreases as subcarrier spacing increases.

In an example, in a case of 15 KHz subcarrier spacing, first processing duration A is equal to 1 millisecond, i.e., 14 orthogonal frequency division multiplexing (OFDM) symbols or a slot. In a case of 30 KHz subcarrier spacing, the first processing duration A is equal to 0.5 millisecond, i.e., 14 OFDM symbols or a slot.

In another example, in a case of 15 KHz subcarrier spacing, the first processing duration A is equal to 0.5 millisecond, i.e., 7 OFDM symbols. In a case of 30 KHz subcarrier spacing, the first processing duration A is equal to 0.25 millisecond, i.e., 7 OFDM symbols.

In another implementation, the first communication node is the second-type communication node, and the first processing duration is 0 millisecond.

It should be noted that, for the second-type communication node, the processing bandwidth of the physical downlink shared channel and the transmission bandwidth of the physical uplink shared channel are greater than the target bandwidth. The first processing duration may be understood as the additional processing duration required for the first-type communication node to process a physical channel greater than the target bandwidth. For the first-type communication node, since its processing bandwidth of the PDSCH is small, and the single processing bandwidth of the PDSCH is limited, the PDSCH larger than the target bandwidth needs to be processed for a plurality of times, resulting in additional processing duration, i.e., the above-mentioned first processing duration. While for the second-type communication node, its processing bandwidth of the PDSCH is not limited, and no additional processing duration is generated, so the first processing duration A is equal to 0.

In S102, the first communication node determines a physical channel to be decoded from a first physical channel and a second physical channel according to the first processing duration.

In some embodiments, the first physical channel and the second physical channel conflict with each other in the time domain. Thus, the first communication node may determine the physical channel to be decoded from the first physical channel and the second physical channel.

It should be noted that, since the single processing bandwidth of the physical channel of the first-type communication node is limited, an additional processing duration is required for the physical channel that is larger than the target bandwidth of the first-type communication node. In a case where two physical channels are scheduled successively within a certain time window and a transmission bandwidth of a first physical channel is greater than the target bandwidth, the processing time of the two physical channels will overlap with each other due to the long processing duration of the first physical channel, that is, the processing time of the two physical channels conflicts with each other in the time domain. Therefore, the first communication node may determine decoding priorities of the physical channels, and prioritize the decoding of one of the two physical channels.

In some embodiments, the first physical channel or the second physical channel may be a physical uplink shared channel, or a physical downlink shared channel or other physical channels, which is not limited thereto.

In some embodiments, the first communication node may determine the physical channel to be decoded from the first physical channel and the second physical channel according to the first processing duration. Exemplarily, there are at least the following three determination modes.

Determination mode 1: in a case where a transmission time period of the second physical channel overlaps with a time period of the first processing duration after a transmission ending time domain symbol of the first physical channel, the first communication node may determine that there is a conflict between the first physical channel and the second physical channel in the time domain, and then the first communication node determines the physical channel to be decoded from the first physical channel and the second physical channel. The transmission ending time domain symbol of the first physical channel may be understood as a last OFDM symbol of the transmitted first physical channel, that is, a transmission ending moment of the first physical channel.

That is, a transmission time period of the second physical channel from the transmission starting to the transmission ending may be determined. A time range with a starting time as a first OFDM symbol after the transmission ending of the first physical channel and with a duration as the first processing duration, may also be determined. In a case where the transmission time period of the second physical channel partially or completely overlaps with the time range, the first communication node may determine that there is a conflict between the first physical channel and the second physical channel in the time domain.

Determination mode 2: in a case where the first physical channel is transmitted in a slot n and the second physical channel is transmitted in a slot n+k, the first communication node may determine that there is a conflict between the first physical channel and the second physical channel in the time domain, and then the first communication node determines the physical channel to be decoded from the first physical channel and the second physical channel. k is less than or equal to the first processing duration. Exemplarily, in a case where the first physical channel is transmitted in a slot n and the second physical channel is transmitted in a slot n+A, the physical channel to be decoded is determined from the first physical channel and the second physical channel. A is the above-mentioned first processing duration. In addition, the first processing duration is equal to a slot, that is, A=1.

Determination mode 3: in a case where transmission time of the second physical channel partially or completely overlaps with a first time window, the first communication node determines the physical channel to be decoded from the first physical channel and the second physical channel. A starting point of the above-mentioned first time window is a starting OFDM symbol of the first physical channel, and an ending point of the first time window is a time point determined by adding an ending OFDM symbol of the first physical channel to the first processing duration.

In some embodiments, the above-mentioned plurality of physical channels may come from a same sending end, or from different sending ends, which is not limited thereto.

In some embodiments, the first communication node may acquire scheduling information of the first physical channel and the second physical channel. The scheduling information includes at least one of a time domain position, a bandwidth, and a channel type of the physical channel.

In some embodiments, the time domain position of the physical channel may be understood as a time domain symbol occupied by the physical channel in the time domain. As an example, the time domain position of the physical channel may indicate a starting time domain symbol and a duration of the physical channel.

In some embodiments, the time domain symbol may be an orthogonal frequency division multiplexing (Orthogonal Frequency Division Multiplexing, OFDM) symbol.

In some embodiments, the channel type includes at least one of a system information block (SIB), a terminal-specific physical shared channel, a physical shared channel for paging, a message 4 (Message 4, Msg4), and a random access response (RAR).

In some embodiments, the physical channel to be decoded may be understood as a physical channel that needs to be prioritized to be decoded among the first physical channel and the second physical channel. In other words, the physical channel to be decoded may be understood as a physical channel that is first decoded, among the first physical channel and the second physical channel.

In some embodiments, the first communication node may also determine the physical channel to be decoded from a plurality of physical channels, so that the physical channel to be decoded may be one or multiple, which is not limited thereto.

In some embodiments, for a physical channel not to be decoded among the first physical channel and the second physical channel, the first communication node may abandon the physical channel not to be decoded. Alternatively, the first communication node, after decoding the physical channel to be decoded completely, may decode the physical channel not to be decoded.

In some embodiments, the first communication node may have the following four decoding schemes.

Scheme 1: the first communication node may first decode the first physical channel, and then decode the second physical channel.

Scheme 2: the first communication node may first decode the second physical channel, and then decode the first physical channel.

Scheme 3: the first communication node may decode the first physical channel, and abandon decoding the second physical channel.

Scheme 4: the first communication node may decode the second physical channel, and abandon decoding the first physical channel.

In the embodiments of the present disclosure, the physical channel is scheduled by a radio network temporary identity (RNTI). Taking a PDSCH as an example, the PDSCH may include: a PDSCH scheduled by a random access radio network temporary identity (Random Access RNTI, RA-RNTI), a PDSCH scheduled by a cell radio network temporary identity (Cell RNTI, C-RNTI), a PDSCH scheduled by a modulation coding scheme cell radio network temporary identity (Modulation Coding Scheme Cell RNTI, MCS-C-RNTI), a PDSCH scheduled by a semi-persistence scheduling radio network temporary identity (Semi-Persistence Scheduling RNTI, SPS-RNTI), a PDSCH scheduled by a configured scheduling radio network temporary identity (Configured Scheduling RNTI, CS-RNTI), a PDSCH scheduled by a group radio network temporary identity (Group RNTI, G-RNTI), a PDSCH scheduled by a multicast broadcast service control channel radio network temporary identity (Multicast broadcast service Control Channel RNTI, MCCH-RNTI), a PDSCH scheduled by a group configured scheduling radio network temporary identity (Group Configured Scheduling RNTI, G-CS-RNTI), a PDSCH scheduled by a message B radio network temporary identity (Message B RNTI, MsgB-RNTI), or a PDSCH scheduled by a system information radio network temporary identity (System information RNTI, SI-RNTI).

For different cases of radio network temporary identities of the first physical channel and the second physical channel in the following, implementations that the first communication node determines the physical channel to be decoded are explained exemplarily.

In an example, the first physical channel includes a physical downlink shared channel (PDSCH) scheduled by the RA-RNTI or the MsgB-RNTI, and the second physical channel includes a PDSCH scheduled by the C-RNTI, the MCS-C-RNTI, the CS-RNTI, the SPS-RNTI, the G-RNTI, the MCCH-RNTI or the G-CS-RNTI, and thus, the first communication node may determine the first physical channel as the physical channel to be decoded.

In another example, the first physical channel includes a PDSCH triggered by a paging radio network temporary identity (Paging RNTI, P-RNTI) and scheduled by a system information radio network temporary identity (SI-RNTI), and the second physical channel includes a PDSCH scheduled by the C-RNTI, the MCS-C-RNTI, the SPS-RNTI or the CS-RNTI, and thus, the first communication node may determine the first physical channel as the physical channel to be decoded.

In yet another example, the first physical channel includes a PDSCH corresponding to system information in a case of the system information being acquired automatically, and the second physical channel includes a PDSCH scheduled by the C-RNTI, the MCS-C-RNTI, the SPS-RNTI or the CS-RNTI, and thus, the first communication node may determine the second physical channel as the physical channel to be decoded.

In yet another example, the first physical channel includes a broadcast PDSCH scheduled by the G-RNTI, a multicast PDSCH scheduled by the G-RNTI, a PDSCH scheduled by the MCCH-RNTI, or a PDSCH scheduled by the G-CS-RNTI, and the second physical channel includes a PDSCH scheduled by the C-RNTI, the CS-RNTI or the SPS-RNTI, and thus, the first communication node may determine the second physical channel as the physical channel to be decoded, or determine the first physical channel as the physical channel to be decoded.

In yet another example, the first physical channel includes a PDSCH scheduled by the RA-RNTI, the SI-RNTI or the MsgB-RNTI, and the second physical channel includes a physical downlink control channel (PDCCH) or a physical broadcast channel (Physical Broadcast Channel, PBCH), and thus, the first communication node may determine the second physical channel as the physical channel to be decoded, or determine the first physical channel as the physical channel to be decoded.

In S103, the first communication node decodes the physical channel to be decoded.

The decoding is an inverse process of encoding. The first communication node, based on an encoding mode in which a sending node that sends the physical channel to be decoded encodes the physical channel, may perform channel decoding on the physical channel to be decoded, to obtain a decoding result. In addition, the first communication node has a decoder, to perform a decoding operation on the channel to be decoded based on the decoder.

Based on the above embodiments, since the Release-18 RedCap UE has a large processing latency when processing a physical channel with a large bandwidth, the first physical channel and the second physical channel may conflict with each other in the time domain, and the first communication node cannot decode the first physical channel and the second physical channel at the same time. Thus, the first communication node may select a proper physical channel to be decoded from the first physical channel and the second physical channel, and decode the physical channel, to ensure that the first communication node can acquire important information carried by the physical channel to be decoded timely, thereby ensuring normal communication of the communication system.

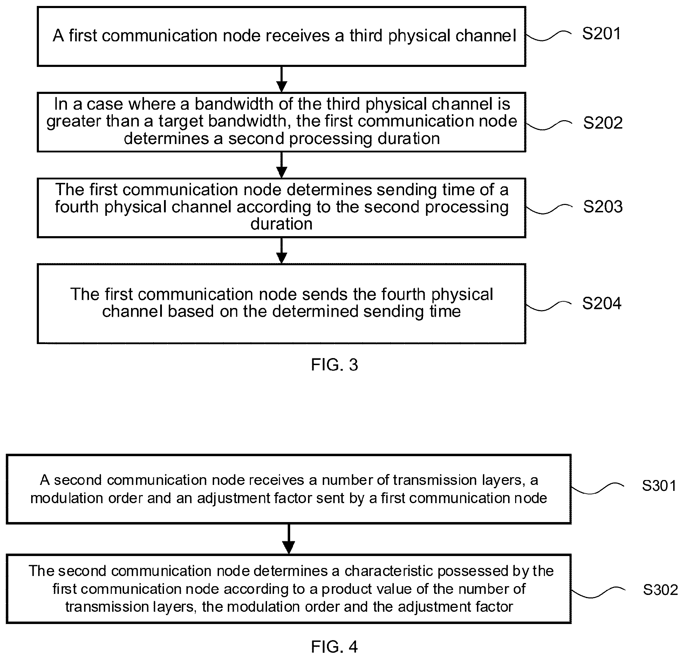

In some embodiments, the present disclosure further provides a physical channel sending method, the method may be applicable to a first communication node. As shown in FIG. 3, the method includes the following S201 to S204.

In S201, the first communication node receives a third physical channel.

In some embodiments, a bandwidth of the third physical channel is greater than a target bandwidth of the first communication node.

The target bandwidth may be a number of physical resource blocks in the frequency domain. Exemplarily, in a case of 15 KHz subcarrier spacing, the target bandwidth is 25 physical resource blocks. Alternatively, in a case of 30 kHz subcarrier spacing, the target bandwidth is 12 physical resource blocks.

In S202, in a case where a bandwidth of the third physical channel is greater than a target bandwidth, the first communication node determines a second processing duration.

The bandwidth of the third physical channel being greater than the target bandwidth represents that a number of PRBs used for transmitting the third physical channel is greater than the target bandwidth.

The second processing duration is an additional processing duration required for a first-type communication node to process a physical channel greater than the target bandwidth.

In some embodiments, the first communication node may determine the second processing duration based on a type of the first communication node.

It should be noted that, since a single processing bandwidth of the PDSCH of the first-type communication node is limited, the PDSCH larger than the target bandwidth needs to be processed for a plurality of times, thus, the additional processing time is required, i.e., the above-mentioned second processing duration.

The communication node may include the first-type communication node and the second-type communication node. For the first-type communication node and the second-type communication node, reference may be made to the relevant description in the above S101, which will not be repeated herein.

In an implementation, the first communication node is the first-type communication node. Furthermore, the second processing duration may be determined based on the first-type communication node, and the second processing duration decreases as subcarrier spacing increases.

In an example, in a case of 15 KHz subcarrier spacing, the second processing duration may be equal to 1 millisecond, or the second processing duration may also be represented as 14 OFDM symbols or a slot. In a case of 30 KHz subcarrier spacing, the second processing duration is equal to 0.5 millisecond, or the second processing duration may also be represented as 14 OFDM symbols or a slot.

In another example, in a case of 15 KHz subcarrier spacing, the second processing duration is equal to 0.5 millisecond, or the second processing duration may also be represented as 7 OFDM symbols. In a case of 30 KHz subcarrier spacing, the second processing duration is equal to 0.25 millisecond, or the second processing duration may also be represented as 7 OFDM symbols.

In another possible implementation, the first communication node is the second-type communication node, and then the second processing duration is 0 millisecond.

In some embodiments, the value of the second processing duration between a separate initial bandwidth part (Bandwidth Part, BWP) corresponding to the RedCap UE and an initial BWP in which a control resource set 0 (Control Resource SET #0, CORESET#0) is located, is different.

In some embodiments, a bandwidth of a fourth physical channel is also greater than the target bandwidth.

In S203, the first communication node determines sending time of the fourth physical channel according to the second processing duration.

In some embodiments, the sending time of the fourth physical channel may also be determined based on the second processing duration and transmission time of the third physical channel.

In some embodiments, the first communication node may determine the sending time of the fourth physical channel based on at least the following four implementations.

Implementation 1, a minimum time interval between a transmission ending time domain symbol of the third physical channel and a transmission starting time domain symbol of the fourth physical channel is equal to a sum of a preset physical downlink shared channel processing duration, a preset physical uplink shared channel preparation duration, the second processing duration and a first preset duration.

In the embodiments of the present disclosure, the transmission ending time domain symbol of the third physical channel may be understood as a last OFDM symbol in which the first communication node receives the third physical channel, and then receiving time of the third physical channel may be determined based on the OFDM symbol. The transmission starting time domain symbol of the fourth physical channel may be understood as a first OFDM symbol of the sent fourth physical channel, and time for transmitting the OFDM symbol is the sending time of the fourth physical channel.

Exemplarily, the minimum time interval is equal to A2+B+C+D1, where A2 is the second processing duration, B is the preset physical downlink shared channel processing duration, C is the preset physical uplink shared channel preparation duration, and D1 is the first preset duration, which may be 0.5 millisecond.

In this implementation, the third physical channel is a physical downlink shared channel corresponding to a random access response, and the fourth physical channel is a physical uplink shared channel corresponding to a message 3 (Msg3). It should be understood that, the first communication node successfully receives the random access response and is based on a type-1 random access procedure (i.e., a four-step random access process).

Implementation 2, a time interval between a transmission ending time domain symbol of the third physical channel and a transmission starting time domain symbol of the fourth physical channel is greater than or equal to a sum of the preset physical downlink shared channel processing duration, the second processing duration and the first preset duration.

Exemplarily, the minimum time interval is equal to A2+B+D1, where A2 is the second processing duration, B is the preset physical downlink shared channel processing duration, and D1 is the first preset duration, which may be 0.5 millisecond.

In this implementation, the third physical channel is a physical downlink shared channel corresponding to a random access response, the fourth physical channel is a physical uplink control channel, and the fourth physical channel carries acknowledgement (ACK) information of correct decoding for the third physical channel. It should be understood that, the first communication node successfully receives the random access response and is based on a type-2 random access procedure (i.e., a two-step random access process).

Implementation 3, in a case where the first communication node does not correctly decode the third physical channel, or the third physical channel does not include a random access preamble identity (RAPID) corresponding to the first communication node, a time interval between the sending time of the fourth physical channel and a transmission ending time domain symbol of the third physical channel is less than or equal to a sum of the second processing duration, a preset physical downlink shared channel processing duration and a second preset duration.

The transmission ending time domain symbol of the third physical channel may be understood as a last OFDM symbol in which the first communication node receives the third physical channel, and then the receiving time of the third physical channel may be determined based on the OFDM symbol.

Exemplarily, the minimum time interval is equal to A2+B+D2, where A2 is the second processing duration, B is the preset physical downlink shared channel processing duration, and D2 is the second preset duration, which may be 0.75 millisecond.

In some embodiments, a higher layer signaling indicates the first communications node to send a PRACH.

In this implementation, the third physical channel is a PDSCH corresponding to a RAR, and the fourth physical channel is a physical random access channel (Physical Random Access Channel, PRACH). It should be understood that, the first communication node does not successfully receive the third physical channel and is based on a type-two random access procedure (i.e., a four-step random access process).

Implementation 4, in a case where the first communication node does not correctly decode the third physical channel, or the third physical channel does not contain a random access preamble identity (RAPID) corresponding to the first communication node, a time interval between sending time of the fourth physical channel and a last time domain symbol of the received third physical channel is less than or equal to a sum of the second processing duration, the preset physical downlink shared channel processing duration and the second preset duration.

The transmission ending time domain symbol of the third physical channel may be understood as a last OFDM symbol in which the first communication node receives the third physical channel, and then, the receiving time of the third physical channel may be determined based on the OFDM symbol.

Exemplarily, the minimum time interval is equal to A2+B+D2, where A2 is the second processing duration, B is the preset physical downlink shared channel processing duration, and D2 is the second preset duration, which may be 0.75 millisecond.

In some embodiments, the high layer signaling indicates the first communication node to send the PRACH based on the type-1 random access procedure or to send the PRACH and PUSCH based on the sending type-2 random access procedure.

In this implementation, the third physical channel is a physical downlink shared channel corresponding to a message B radio network temporary identity (MsgB-RNTI), and the fourth physical channel is a physical random access channel (PRACH).

In some embodiments, in the above four implementations, the value of the second processing duration may be the same or may be different. In some embodiments, in the above four implementations, at least two implementations have different values of the second processing duration.

In some embodiments, the time domain symbol may be an orthogonal frequency division multiplexing (OFDM) symbol.

In S204, the first communication node sends the fourth physical channel based on the determined sending time.

Based on the above embodiments, in a case where the bandwidth of the third physical channel is greater than the target bandwidth of the first communication node, a reasonable sending time of the fourth physical channel is determined based on the second processing duration, to avoid the conflict between processing the third physical channel and sending the fourth physical channel.

The present disclosure further provides a method for determining a characteristic of a first communication node. The determining method may be applicable to a second communication node and a first communication node. As shown in FIG. 4, the method includes the following S301 and S302.

In S301, the second communication node receives a number of transmission layers, a modulation order and an adjustment factor sent by the first communication node.

The first communication node may send the number of transmission layers, the modulation order, and the adjustment factor to the second communication node. Then, the second communication node receives the number of transmission layers, the modulation order and the adjustment factor.

The number of transmission layers is a maximum number of transmission layers supported by a PDSCH transmission or a PUSCH transmission of the first communication node. For example, for the PDSCH, the first communication node supports up to 2 layers of transmission, and the number of transmission layers for sending is 2.

The modulation order is a modulation order used to calculate a peak data rate of the first communication node. The first communication node sends the modulation order according to its own capability. If the sent modulation order corresponds to M, the second communication node may calculate the peak data rate supported by the first communication node based on the modulation order M, and M may be equal to 1, 2, 4, 6 or 8.

The adjustment factor is an adjustment factor used to calculate the peak data rate of the first communication node. For example, the adjustment factor may be the value of 0.4, 0.75, 0.8 or 1. In some embodiments, the adjustment factor may also take other values, which is not limited thereto. The first communication node sends the adjustment factor according to its own capability.

In some embodiments, the peak data rate of the first communication node is calculated based on a product of the number of transmission layers, the modulation order, and the adjustment factor. The peak data rate of the first communication node is monotonically increasing with the product of the above-mentioned three parameters. The larger the product of the number of transmission layers, the modulation order and the adjustment factor is, the higher the peak data rate is.

In S302, the second communication node determines a characteristic possessed by the first communication node, according to a product value of the number of transmission layers, the modulation order and the adjustment factor.

The communication node may include the first-type communication node and the second-type communication node. The first communication node has at least one of the following two characteristics.

Characteristic 1: the first-type communication node satisfies a bandwidth requirement. The bandwidth requirement includes that a processing bandwidth of the PDSCH is less than or equal to the above-mentioned target bandwidth. The processing bandwidth of the PDSCH represents a number of PRBs that the first-type communication node can process for the PDSCH in a slot.

The bandwidth requirement may include that a transmission bandwidth of the PUSCH is less than or equal to the above-mentioned target bandwidth. The transmission bandwidth of the PUSCH represents the number of PRBs that the first-type communication node can send for the PUSCH in a slot or a frequency hopping resource.

Characteristic 2: the first-type communication node satisfies a peak data rate requirement. The peak data rate requirement includes a product of the number of transmission layers, the modulation order and the adjustment factor being less than 4.

In a case where the product of the number of transmission layers, the modulation order and the adjustment factor is less than 4, the peak data rate decreases. It should be understood that, the above-mentioned peak data rate is determined based on the product of the three capability parameters, i.e., the number of transmission layers, the modulation order and the adjustment factor. Typically, the product of the three capability parameters is greater than or equal to 4. However, the product of the three capability parameters, i.e., the modulation order, the number of transmission layers, and the adjustment factor, reported by the first-type communication node, is less than 4, and the minimum value of the product is equal to 3.2 or 0.8. For the first-type communication node, the product of the three capability parameters is reduced to 3.2 or 0.8, thereby the peak data rate is reduced accordingly. Furthermore, the first-type communication node has lower complexity.

It should be understood that, the first communication node has the above Characteristic 1, or the first communication node has the above Characteristic 2, or the first communication node has both the above Characteristic 1 and Characteristic 2. The second communication node determines the characteristic possessed by the first communication node according to the number of transmission layers, the modulation order and the adjustment factor reported by the first communication node.

In some embodiments, in a case where the product value of the number of transmission layers, the modulation order and the adjustment factor is less than 3.2, the first-type communication node has the above Characteristic 2, but does not have the above Characteristic 1.

In some embodiments, in a case where the product value of the number of transmission layers, the modulation order and the adjustment factor is greater than or equal to 3.2 and less than 4, the first-type communication node has the above Characteristic 1 and Characteristic 2.

The above introduces the solutions provided by the present disclosure mainly from the perspective of interaction between various nodes. It can be understood that, in order to implement the above functions, the various nodes, e.g., the apparatuses or devices, contain corresponding hardware structures and/or software modules for performing various functions. Those skilled in the art should easily realize that, in conjunction with the exemplary algorithm steps described in the embodiments disclosed herein, the present disclosure can be implemented in the form of hardware or a combination of hardware and computer software. Whether a certain function is performed via the hardware or the computer software-driven hardware depends on the specific application and restrictive conditions of design of the technical solutions. Professional technicians may use different methods to implement the described functions for each specific application, but such implementation should not be considered beyond the scope of the present disclosure.

In the embodiments of the present disclosure, the communication apparatus may be divided into functional modules according to the foregoing method embodiments, for example, may be divided in a way that each functional module corresponds to each function, or two or more functions are integrated into one functional module. The integrated module may be implemented in the form of hardware, or may be implemented in the form of software. It should be noted that the division of the modules in embodiments of the present disclosure is schematic, which is only a logical functional division, and there may be other divisions for in actual implementations. The following is an example of dividing each functional module corresponding to each function.

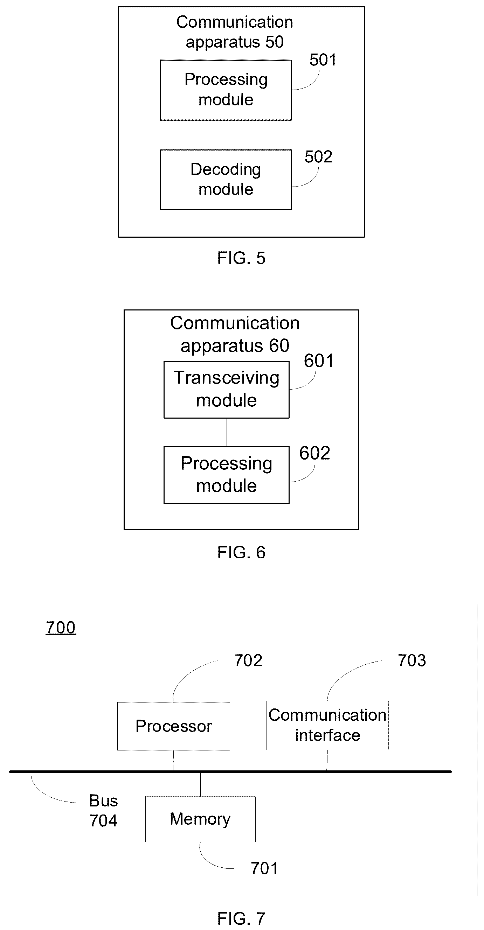

FIG. 5 illustrates a schematic diagram of components of a communication apparatus, provided in the embodiments of the present disclosure. As shown in FIG. 5, the communication apparatus 50 is applied to a first communication node, and includes a processing module 501 and a decoding module 502.

In some embodiments, the processing module 501 is configured to determine a first processing duration. The processing module 501 is further configured to determine a physical channel to be decoded from a first physical channel and a second physical channel according to the first processing duration. The decoding module 502 is configured to decode the physical channel to be decoded.

In some embodiments, the processing module 501, for example, is configured to determine the first processing duration according to a type of the first communication node.

In some embodiments, the first communication node is a first-type communication node, and the first processing duration decreases as subcarrier spacing increases. The first-type communication node satisfies at least one of: a bandwidth requirement, where the bandwidth requirement includes a processing bandwidth of a physical downlink shared channel being less than or equal to a target bandwidth;

a peak data rate requirement, where the peak data rate requirement includes a product of a number of transmission layers, a modulation order and an adjustment factor being less than 4.

In some embodiments, in a case where a product value of the number of transmission layers, the modulation order and the adjustment factor is less than 3.2, the first-type communication node only satisfies the peak data rate requirement.

In some embodiments, in a case where a product value of the number of transmission layers, the modulation order and the adjustment factor is greater than or equal to 3.2 and less than 4, the first-type communication node satisfies the bandwidth requirement and the peak data rate requirement.

In some embodiments, the subcarrier spacing is 15 KHz, and the first processing duration is 1 millisecond or 0.5 millisecond; or the subcarrier spacing is 30 KHz, and the first processing duration is 0.5 millisecond or 0.25 millisecond.

In some embodiments, the processing module 501, for example, is configured to determine one of the first physical channel and the second physical channel as the physical channel to be decoded, in a case where a transmission time period of the second physical channel partially or completely overlaps with a time period of the first processing duration after a transmission ending orthogonal frequency division multiplexing time domain symbol of the first physical channel.

In some embodiments, the processing module 501, for example, is configured to determine one of the first physical channel and the second physical channel as the physical channel to be decoded, in a case where the first physical channel is transmitted in a slot n, the second physical channel is transmitted in a slot n+k, and the k is less than or equal to the first processing duration.

In some embodiments, a bandwidth of the first physical channel is greater than a target bandwidth of the first communication node.

In some embodiments, the first physical channel includes a physical downlink shared channel (PDSCH) scheduled by a random access radio network temporary identity (RA-RNTI) or a message B radio network temporary identity (MsgB-RNTI); the second physical channel includes a PDSCH scheduled by a cell radio network temporary identity (C-RNTI), a modulation coding scheme cell radio network temporary identity (MCS-C-RNTI), a configured scheduling radio network temporary identity (CS-RNTI), a group radio network temporary identity (G-RNTI), a multicast broadcast service control channel radio network temporary identity (MCCH-RNTI) or a group configured scheduling radio network temporary identity (G-CS-RNTI).

In some embodiments, the first physical channel includes a PDSCH triggered by a paging radio network temporary identity (P-RNTI) and scheduled by a system information radio network temporary identity (SI-RNTI); the second physical channel includes a PDSCH scheduled by a C-RNTI, an MCS-C-RNTI or a CS-RNTI.

In some embodiments, the processing module 501, for example, is configured to determine the first physical channel as the physical channel to be decoded.

In some embodiments, the first physical channel includes a PDSCH corresponding to system information in a case of the system information being acquired automatically; the second physical channel includes a PDSCH scheduled by a C-RNTI, an MCS-C-RNTI or a CS-RNTI.

In some embodiments, the processing module 501, for example, is configured to determine the second physical channel as the physical channel to be decoded.

For more detailed descriptions of the above processing module 501 and the decoding module 502, and more detailed descriptions of various technical features therein, and descriptions of the beneficial effects, etc., references may be made to the above corresponding encoding method embodiment sections, which will not be repeated herein.

FIG. 6 illustrates a schematic diagram of components of a communication apparatus, provided in the embodiments of the present disclosure. As shown in FIG. 6, the communication apparatus 60 is applied to a first communication node, and includes a transceiving module 601 and a processing module 602.

In some embodiments, the transceiving module 601 is configured to receive a third physical channel. The processing module 602 is configured to determine a second processing duration in a case where a bandwidth of the third physical channel is greater than a target bandwidth of the first communication node. The processing module 602 is further configured to determine sending time of a fourth physical channel according to the second processing duration. The transceiving module 601 is further configured to send the fourth physical channel based on the sending time.

In some embodiments, a minimum time interval between a transmission ending time domain symbol of the third physical channel and a transmission starting time domain symbol of the fourth physical channel is equal to a sum of a preset physical downlink shared channel processing duration, a preset physical uplink shared channel preparation duration, the second processing duration and a first preset duration. The third physical channel is a physical downlink shared channel corresponding to a random access response, the fourth physical channel is a physical uplink shared channel corresponding to a message 3 (Msg3), and transmission time of the transmission starting time domain symbol of the fourth physical channel is the sending time of the fourth physical channel.

In some embodiments, in a case where a random access response is received successfully, a time interval between a transmission ending time domain symbol of the third physical channel and a transmission starting time domain symbol of the fourth physical channel is greater than or equal to a sum of a preset physical downlink shared channel processing duration, the second processing duration and a first preset duration. The third physical channel is a physical downlink shared channel corresponding to the random access response, the third physical channel is a physical uplink control channel, the third physical channel carries acknowledgement (ACK) information of correct decoding for the third physical channel, and transmission time of the transmission starting time domain symbol of the fourth physical channel is the sending time of the fourth physical channel.

In some embodiments, the first preset duration is 0.5 millisecond.

In some embodiments, in a case where the first communication node does not correctly decode the third physical channel, or the third physical channel does not include a random access preamble identity (RAPID) corresponding to the first communication node, a time interval between the sending time of the fourth physical channel and a transmission ending time domain symbol of the third physical channel that is received is less than or equal to a sum of the second processing duration, a preset physical downlink shared channel processing duration and a second preset duration.

In some embodiments, the second duration is 0.75 millisecond.

In some embodiments, the third physical channel is a physical downlink shared channel corresponding to a random access response or a physical downlink shared channel corresponding to a message B radio network temporary identity (MsgB-RNTI), and the fourth physical channel is a physical random access channel (PRACH).

In some embodiments, the first communication node is a first-type communication node, and the second processing duration decreases as subcarrier spacing increases. The first-type communication node satisfies at least one of: a bandwidth requirement, where the bandwidth requirement includes a processing bandwidth of a physical downlink shared channel being less than or equal to a target bandwidth; a peak data rate requirement, where the peak data rate requirement includes a product of a number of transmission layers, a modulation order and an adjustment factor being less than 4.

In some embodiments, in a case where a product value of the number of transmission layers, the modulation order and the adjustment factor is less than 3.2, the first-type communication node only satisfies the peak data rate requirement.

In some embodiments, in a case where a product value of the number of transmission layers, the modulation order and the adjustment factor is greater than or equal to 3.2 and less than 4, the first-type communication node satisfies the bandwidth requirement and the peak data rate requirement.

In some embodiments, the subcarrier spacing is 15 KHz and the second processing duration is 1 millisecond; the subcarrier spacing is 30 KHz and the second processing duration is 0.5 millisecond; or the subcarrier spacing is 15 KHz, and the second processing duration is 0.5 millisecond; the subcarrier spacing is 30 KHz, and the second processing duration is 0.25 millisecond.

For more detailed descriptions of the above transceiving module 601 and the processing module 602, and more detailed descriptions of various technical features therein, and descriptions of the beneficial effects, etc., references may be made to the above corresponding encoding method embodiment sections, which will not be repeated herein.

It should be noted that, the modules in FIG. 5 and FIG. 6 may also be referred to as units, and for example, the processing module may be referred to as a processing unit. In addition, in the embodiments shown in FIG. 5 or FIG. 6, the names of the respective modules may not be the names shown in the figures, and for example, the acquiring module or the sending module may also be referred to as a communication module.

If each unit in FIG. 5 or FIG. 6 is implemented in the form of a software functional module, and sold or used as a separate product, the unit may be stored in a computer readable storage medium. Based on this understanding, the technical solutions of the embodiments of the present disclosure may be essentially, or a part of the technical solutions that contributes to the relevant technology, or a part of all of the technical solutions, may be embodied in the form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of medium capable of storing program codes, such as a U disk (USB flash disk), a mobile hard disk, a read-only memory (ROM), a random access memory (RAM), a magnetic disk, or an optical disk, etc.

In a case where the functions of the above integrated modules are implemented in the form of hardware, the embodiments of the present disclosure provide a structural schematic diagram of a communication apparatus. As shown in FIG. 7, the communication apparatus 700 includes a processor 702, a communication interface 703 and a bus 704. In some embodiments, the communication apparatus 700 may also include a memory 701.

The processor 702 may implement or execute various illustrative logical blocks, modules and circuits described in conjunction with the contents of the present disclosure. The processor 702 may be a central processing unit, a general-purpose processor, a digital signal processor, an application specific integrated circuit, a field programmable gate array or any other programmable logic device, a transistor logic device, a hardware component, or any combination thereof, which may implement or execute various illustrative logical blocks, modules and circuits described in conjunction with the contents of the present disclosure. The processor 702 may also be a combination capable of implementing computing functions, for example, including a combination of one or more microprocessors, or a combination of a digital signal processor (DSP) and a microprocessor.

The communication interface 703 is configured to connect with other devices through a communication network. The communication network may be an Ethernet, a radio access network, a wireless local area network (WLAN), or the like.

The memory 701 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As an implementation, the memory 701 may exist independently of the processor 702, and the memory 701 may be connected to the processor 702 through the bus 704, for storing instructions or program codes. When calling and executing the instructions or the program codes stored in the memory 701, the processor 702 is capable of implementing the method provided in the embodiments of the present disclosure.

As another implementation, the memory 701 may be integrated with the processor 702.

The bus 704 may be an extended industry standard architecture (EISA) bus or the like. The bus 704 may be classified into an address bus, a data bus, and a control bus, or the like. For the convenience of representation, only one thick line is used in FIG. 7 for representation, but it does not mean that there is only one bus or one type of bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the device or apparatus is divided into different functional modules to complete all or a part of the functions mentioned above.

The embodiments of the present disclosure further provide a computer-readable storage medium ( e.g., a non-transitory computer readable storage medium). All or a part of the procedures in the method embodiments mentioned above may be completed by related hardware indicated by computer instructions, and the program may be stored in the computer-readable storage medium mentioned above. The program, when executed, may include the procedures of the method embodiments mentioned above. The computer readable storage medium may be or a memory of any one of the aforementioned embodiments. The above-mentioned computer readable storage medium may also be an external storage device of the device or apparatus mentioned above, e.g., a plug-in hard disk, a smart memory card (smart media card, SMC), a secure digital (SD) card, a flash card, etc., equipped on the device or apparatus mentioned above. Furthermore, the computer-readable storage medium mentioned above may further include both an internal storage unit and an external storage device of the device or apparatus mentioned above. The computer-readable storage medium mentioned above is used to store the computer program mentioned above, and other programs and data required for the device or apparatus mentioned above. The computer-readable storage medium mentioned above may further be used to temporarily store data that has been output or is to be output.

The embodiments of the present disclosure further provide a computer program product, the computer product contains a computer program, the computer program product, when executed on a computer, causes the computer to perform any one of the methods provided in the above embodiments.

In the technical solutions provided in the embodiments of the present disclosure, since the Release-18 RedCap UE has a large processing latency when processing a physical channel with a large bandwidth, the first physical channel and the second physical channel may conflict with each other in the time domain, and the first communication node cannot decode the first physical channel and the second physical channel at the same time. Thus, the first communication node may select a proper physical channel to be decoded from the first physical channel and the second physical channel, and decode the physical channel, to ensure that the first communication node can acquire important information carried by the physical channel to be decoded timely, thereby ensuring normal communication of the communication system. In addition, in a case where the bandwidth of the third physical channel is greater than the target bandwidth of the first communication node, a reasonable sending time of the fourth physical channel is determined based on the second processing duration, to avoid the conflict between processing the third physical channel and sending the fourth physical channel.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with specific features and embodiments thereof, it is apparent that various modifications and combinations may be made thereto without departing from the spirit and scope of the present disclosure. Accordingly, the specification and drawings are merely exemplary explanations of the present disclosure as defined by the attached claims and are deemed to cover any and all modifications, variations, combinations or equivalents within the scope of the present disclosure. Obviously, those skilled in the art may make various changes and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above is merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure should be based on the protection scope of the claims.

## Claims

1. A physical channel receiving method, applied to a first communication node, and comprising:
determining a first processing duration;
determining a physical channel to be decoded from a first physical channel and a second physical channel according to the first processing duration; and
decoding the physical channel to be decoded.

2. The method according to claim 1, wherein determining the first processing duration comprises:
determining the first processing duration according to a type of the first communication node.

3. The method according to claim 1 or 2, wherein the first communication node is a first-type communication node, and the first processing duration decreases as subcarrier spacing increases; wherein the first-type communication node satisfies at least one of:
a bandwidth requirement, wherein the bandwidth requirement comprises a processing bandwidth of a physical downlink shared channel being less than or equal to a target bandwidth;
a peak data rate requirement, wherein the peak data rate requirement comprises a product of a number of transmission layers, a modulation order and an adjustment factor being less than 4.

4. The method according to claim 3, wherein in a case where a product value of the number of transmission layers, the modulation order and the adjustment factor is less than 3.2, the first-type communication node only satisfies the peak data rate requirement.

5. The method according to claim 3, wherein in a case where a product value of the number of transmission layers, the modulation order and the adjustment factor is greater than or equal to 3.2 and less than 4, the first-type communication node satisfies the bandwidth requirement and the peak data rate requirement.

6. The method according to claim 3, wherein the subcarrier spacing is 15 KHz, and the first processing duration is 1 millisecond or 0.5 millisecond; or the subcarrier spacing is 30 KHz, and the first processing duration is 0.5 millisecond or 0.25 millisecond.

7. The method according to claim 1, wherein determining the physical channel to be decoded from the first physical channel and the second physical channel according to the first processing duration comprises:
in a case where a transmission time period of the second physical channel partially or completely overlaps with a time period of the first processing duration after a transmission ending time domain symbol of the first physical channel, determining one of the first physical channel and the second physical channel as the physical channel to be decoded.

8. The method according to claim 1, wherein determining the physical channel to be decoded from the first physical channel and the second physical channel according to the first processing duration comprises:
in a case where the first physical channel is transmitted in a slot n, the second physical channel is transmitted in a slot n+k, and the k is less than or equal to the first processing duration, determining one of the first physical channel and the second physical channel as the physical channel to be decoded.

9. The method according to claim 1, wherein a bandwidth of the first physical channel is greater than a target bandwidth.

10. The method according to claim 1, wherein the first physical channel comprises a physical downlink shared channel (PDSCH) scheduled by a random access radio network temporary identity (RA-RNTI) or a message B radio network temporary identity (MsgB-RNTI);
the second physical channel comprises a PDSCH scheduled by a cell radio network temporary identity (C-RNTI), a modulation coding scheme cell radio network temporary identity (MCS-C-RNTI), a configured scheduling radio network temporary identity (CS-RNTI), a group radio network temporary identity (G-RNTI), a multicast broadcast service control channel radio network temporary identity (MCCH-RNTI) or a group configured scheduling radio network temporary identity (G-CS-RNTI).

11. The method according to claim 1, wherein the first physical channel comprises a physical downlink shared channel (PDSCH) triggered by a paging radio network temporary identity (P-RNTI) and scheduled by a system information radio network temporary identity (SI-RNTI);
the second physical channel comprises a PDSCH scheduled by a cell radio network temporary identity (C-RNTI), a modulation coding scheme cell radio network temporary identity (MCS-C-RNTI) or a configured scheduling radio network temporary identity (CS-RNTI).

12. The method according to claim 10 or 11, wherein determining the physical channel to be decoded from the first physical channel and the second physical channel comprises:
determining the first physical channel as the physical channel to be decoded.

13. The method according to claim 1, wherein the first physical channel comprises a physical downlink shared channel (PDSCH) corresponding to system information in a case of the system information being acquired automatically;
the second physical channel comprises a PDSCH scheduled by a cell radio network temporary identity (C-RNTI), a modulation coding scheme cell radio network temporary identity (MCS-C-RNTI) or a configured scheduling radio network temporary identity (CS-RNTI).

14. The method according to claim 13, wherein determining the physical channel to be decoded from the first physical channel and the second physical channel comprises:
determining the second physical channel as the physical channel to be decoded.

15. The method according to claim 1, wherein the first physical channel comprises a broadcast physical downlink shared channel (PDSCH) scheduled by a group radio network temporary identity (G-RNTI), a multicast PDSCH scheduled by the G-RNTI, a PDSCH scheduled by a multicast broadcast service control channel radio network temporary identity (MCCH-RNTI), or a PDSCH scheduled by a group configured scheduling radio network temporary identity (G-CS-RNTI);
the second physical channel comprises a PDSCH scheduled by a cell radio network temporary identity (C-RNTI), or a configured scheduling radio network temporary identity (CS-RNTI).

16. A physical channel sending method, wherein the method is applied to a first communication node, and the method comprises:
receiving a third physical channel;
in a case where a bandwidth of the third physical channel is greater than a target bandwidth, determining a second processing duration;
determining sending time of a fourth physical channel according to the second processing duration; and
sending the fourth physical channel based on the sending time.

17. The method according to claim 16, wherein a minimum time interval between a transmission ending time domain symbol of the third physical channel and a transmission starting time domain symbol of the fourth physical channel is equal to a sum of a preset physical downlink shared channel processing duration, a preset physical uplink shared channel preparation duration, the second processing duration and a first preset duration, wherein the third physical channel is a physical downlink shared channel corresponding to a random access response, the fourth physical channel is a physical uplink shared channel corresponding to a message 3 (Msg3), and transmission time of the transmission starting time domain symbol of the fourth physical channel is the sending time of the fourth physical channel.

18. The method according to claim 16, wherein in a case where a random access response is received successfully, a time interval between a transmission ending time domain symbol of the third physical channel and a transmission starting time domain symbol of the fourth physical channel is greater than or equal to a sum of a preset physical downlink shared channel processing duration, the second processing duration and a first preset duration, wherein the third physical channel is a physical downlink shared channel corresponding to the random access response, the third physical channel is a physical uplink control channel, the third physical channel carries acknowledgement (ACK) information of correct decoding for the third physical channel, and transmission time of the transmission starting time domain symbol of the fourth physical channel is the sending time of the fourth physical channel.

19. The method according to claim 17 or 18, wherein the first preset duration is 0.5 millisecond.

20. The method according to claim 16, wherein in a case where the first communication node does not correctly decode the third physical channel, or the third physical channel does not comprise a random access preamble identity (RAPID) corresponding to the first communication node, a time interval between the sending time of the fourth physical channel and a transmission ending time domain symbol of the third physical channel that is received is less than or equal to a sum of the second processing duration, a preset physical downlink shared channel processing duration and a second preset duration;
wherein the third physical channel is a physical downlink shared channel corresponding to a random access response or a physical downlink shared channel corresponding to a message B radio network temporary identity (MsgB-RNTI), and the fourth physical channel is a physical random access channel (PRACH).

21. The method according to claim 20, wherein the second preset duration is 0.75 millisecond.

22. The method according to claim 16, wherein the first communication node is a first-type communication node, and the second processing duration decreases as subcarrier spacing increases; wherein the first-type communication node satisfies at least one of:
a bandwidth requirement, wherein the bandwidth requirement comprises a processing bandwidth of a physical downlink shared channel being less than or equal to a target bandwidth;
a peak data rate requirement, wherein the peak data rate requirement comprises a product of a number of transmission layers, a modulation order and an adjustment factor being less than 4.

23. The method according to claim 22, wherein in a case where a product value of the number of transmission layers, the modulation order and the adjustment factor is less than 3.2, the first-type communication node only satisfies the peak data rate requirement.

24. The method according to claim 22, wherein in a case where a product value of the number of transmission layers, the modulation order and the adjustment factor is greater than or equal to 3.2 and less than 4, the first-type communication node satisfies the bandwidth requirement and the peak data rate requirement.

25. The method according to claim 22, wherein the subcarrier spacing is 15 KHz and the second processing duration is 1 millisecond; the subcarrier spacing is 30 KHz and the second processing duration is 0.5 millisecond; or
the subcarrier spacing is 15 KHz, and the second processing duration is 0.5 millisecond; the subcarrier spacing is 30 KHz, and the second processing duration is 0.25 millisecond.

26. A communication apparatus, comprising a memory, a processor, and computer program instructions stored on the memory and runnable on the processor, wherein the processor, when executing the computer program instructions, implements the method according to any one of claims 1 to 25.

27. A computer readable storage medium, wherein the computer readable storage medium comprises computer program instructions; wherein the computer program instructions, when executed on a computer, cause the computer to perform the method according to any one of claims 1 to 25.
